# FASCICULE DE BREVET EUROPEEN

(11) **EP 3 374 403 B1**
(45) Date de publication et mention de la délivrance du brevet: **15.01.2020**
(21) Numéro de dépôt: 16806244.6
(22) Date de dépôt: 03.11.2016
(51) Int. Cl.: C08C 19/25, B60C 1/00, C08L 15/00

(54) **COMPOSITION DE CAOUTCHOUC COMPRENANT UN POLYMÈRE DIÉNIQUE FONCTIONNEL**
KAUTSCHUKZUSAMMENSETZUNG ENTHALTEND EIN FUNKTIONALISIERTES DIENPOLYMER
RUBBER COMPOSITION COMPRISING A FUNCTIONALIZED DIENE POLYMER

(30) Priorité: 13.11.2015 FR 1560849
(43) Date de publication de la demande: 19.09.2018
(73) Titulaire: Compagnie Générale des Etablissements Michelin, 63000 Clermont-Ferrand (FR)
(72) Inventeur: THUILLIEZ, Anne-Lise, 63040 Clermont-Ferrand Cedex 9 (FR); GAVARD-LONCHAY, Odile, 63040 Clermont-Ferrand Cedex 9 (FR)
(74) Mandataire: Gandon-Pain, Sylvie
(86) Numéro de dépôt international: PCT/FR2016/052844
(87) Numéro de publication internationale: WO 2017/081388

(56) Documents cités:
- EP-A1- 2 664 626
- WO-A1-2014/052160

## Description

La présente invention concerne le domaine des compositions de caoutchouc, particulièrement destinées à être utilisées dans un article semi-fini caoutchouteux comportant des éléments de renforcement métalliques. Plus particulièrement, l'invention s'intéresse aux compositions de caoutchouc utilisables dans la fabrication de structure de renforcement ou armature de renforcement pour pneumatique de véhicules.

Les composites métal / caoutchouc, notamment pour pneumatiques, sont bien connus. Ils sont généralement constitués d'une matrice en caoutchouc diénique, réticulable, comportant des éléments de renforcement généralement sous forme de fil(s) ou d'assemblages de fils. Ils peuvent être utilisés dans un pneumatique, par exemple comme armature de carcasse radiale, telles que les nappes carcasse, les nappes sommets.

Un pneumatique à armature de carcasse radiale, de manière connue comporte une bande de roulement, deux bourrelets inextensibles, deux flancs reliant les bourrelets à la bande de roulement et une ceinture disposée circonférentiellement entre l'armature de carcasse et la bande de roulement, cette ceinture et l'armature de carcasse étant constituées de diverses nappes (ou "couches") de caoutchouc renforcées par des éléments de renforcement filaires ou renforts filaires tels que des câbles ou des monofilaments, par exemple métalliques. Une nappe de renforcement renforcée par des éléments filaires est donc constituée d'une gomme et d'éléments de renforcement qui sont noyés dans la gomme. La gomme est généralement à base d'un élastomère diénique, le caoutchouc naturel, d'une charge renforçante comme le noir de carbone, d'un système de réticulation à base de soufre et d'oxyde de zinc. Les éléments de renforcement sont disposés pratiquement parallèlement les uns aux autres à l'intérieur de la nappe.

Pour remplir efficacement leur fonction de renforcement de ces nappes, soumises comme on le sait à des contraintes très importantes lors du roulage des pneumatiques, les éléments de renforcement filaires métalliques doivent satisfaire à un très grand nombre de critères techniques, parfois contradictoires, tels qu'une haute endurance en fatigue, une résistance élevée à la traction, à l'usure et à la corrosion, une forte adhésion au caoutchouc environnant, et être capables de maintenir ces performances à un niveau très élevé aussi longtemps que possible.

On comprend aisément que l'adhésion entre la gomme et les éléments de renforcement filaires métalliques est donc une propriété clé pour la pérennité de ces performances.

Par exemple, le procédé traditionnel pour relier la gomme à de l'acier consiste à revêtir la surface de l'acier avec du laiton (alliage cuivre-zinc), la liaison entre l'acier et la gomme étant assurée par la sulfuration du laiton lors de la vulcanisation ou cuisson de l'élastomère présent dans la gomme. Or, on sait que l'adhésion entre l'acier et la gomme est susceptible de s'affaiblir au cours du temps, du fait de l'évolution progressive des sulfures formés sous l'effet des différentes sollicitations rencontrées, notamment mécaniques et/ou thermiques.

Par ailleurs, les éléments de renforcement métallique peuvent être faits d'un métal autre que l'acier ou être recouverts d'un métal différent de l'acier tel que l'aluminium, le cobalt, le cuivre, l'étain, le nickel, le zinc ou leurs alliages. Il est aussi d'un intérêt économique de disposer d'un matériau qui puisse adhérer non seulement à l'acier, mais aussi à d'autres métaux.

Il est aussi connu d'utiliser des systèmes adhésifs ou colles qui assurent dans les composites métal / caoutchouc une bonne liaison entre le métal et le caoutchouc. L'utilisation d'une colle passe généralement par l'application de la colle sur le métal avant la fabrication du composite. Cette opération de dépôt de colle sur le métal requiert des installations spécifiques et propres à l'application de la colle, notamment des bains, dans la chaîne de fabrication du composite. Ces installations ont l'inconvénient de prendre de la place et représentent un coût. Il peut aussi arriver que le dépôt de colle ne soit pas uniforme sur toute la surface du métal, ce qui peut entraîner des hétérogénéités dans les propriétés finales du composite. Il y a donc intérêt à supprimer le recours à une colle dans la fabrication de tels composites pour éviter ces inconvénients.

Il est donc une préoccupation constante des manufacturiers de pneumatique de trouver des compositions de caoutchouc qui non seulement présentent une bonne adhésion, mais aussi ne présentent pas les inconvénients mentionnés précédemment.

Au cours de leurs recherches, les Demanderesses ont découvert que l'introduction d'au plus 30% en masse d'un polymère diénique portant au moins un groupe du type dihydroxyaryle dans une matrice polymère contenue dans une composition de caoutchouc diénique permet de résoudre les inconvénients mentionnés plus haut.

De la demande de brevet WO2009086490, il est connu d'utiliser dans une composition de caoutchouc un polymère diénique portant des groupes aromatiques substitués par des fonctions hydroxy pour diminuer les propriétés d'hystérèse de la composition de caoutchouc afin de réduire la résistance au roulement d'un pneumatique. La demande de brevet WO2011002994 divulgue un procédé de synthèse de polymères portant des groupes aryles substitués par au moins deux fonctions hydroxy et éventuellement des fonctions OR hydrolysables. Ces polymères peuvent être utilisés dans des compositions de caoutchouc pour bandes de roulement de pneumatique pour réduire l'hystérèse. Mais aucune de ces demandes ne divulgue que l'utilisation d'au plus 30% en masse d'un polymère diénique portant un ou plusieurs groupes aromatiques substitués par au moins deux fonctions hydroxy vicinales dans une matrice élastomère diénique qui comporte en outre plus de 50% en masse d'un élastomère diénique et qui est contenue dans une composition de caoutchouc permet d'améliorer la liaison entre un métal et la composition de caoutchouc, les fonctions hydroxy étant vicinales.

Ainsi, un premier objet de l'invention est une composition de caoutchouc à base au moins d'une matrice polymère comportant un élastomère diénique Ed et un polymère diénique fonctionnel qui porte au moins un groupe aromatique substitué par au moins deux fonctions hydroxy, l'élastomère diénique Ed représentant plus de 50% en masse de la matrice polymère, caractérisée en ce que le polymère diénique fonctionnel représente au plus 30% en masse de la matrice polymère et deux des fonctions hydroxy sont vicinales.

Un autre objet de l'invention est un article semi-fini comportant des éléments de renforcement présentant une surface métallique destinée à entrer au contact de la composition de caoutchouc, lesquels éléments de renforcement sont enrobés dans la composition de caoutchouc conforme à l'invention.

L'invention porte aussi sur un pneumatique comprenant un article semi-fini conforme à l'invention.

### I. DESCRIPTION DETAILLEE DE L'INVENTION :

Dans la présente description, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans la présente description, sauf indication expresse différente, tous les pourcentages (%) indiqués sont des % en masse.

Par l'expression composition "à base de", il faut entendre dans la présente description une composition comportant le mélange et/ou le produit de réaction in situ des différents constituants utilisés, certains de ces constituants (par exemple la matrice élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

Dans la présente demande, la dénomination « le groupe aromatique » désigne le groupe aromatique qui est substitué par au moins les deux fonctions hydroxy vicinales telles que définies selon l'invention et qui est porté par le polymère diénique fonctionnel utile aux besoins de l'invention selon l'un quelconque de ses modes de réalisation.

Dans la présente demande, la fonction hydroxy fait référence au groupe OH.

On entend par matrice polymère l'ensemble des polymères (c'est-à-dire chaînes macromoléculaires) présents dans la composition de caoutchouc

La matrice polymère a pour caractéristique essentielle de comprendre un polymère diénique fonctionnel qui porte au moins un groupe aromatique, lequel groupe aromatique est substitué par au moins deux fonctions hydroxy, deux des fonctions hydroxy étant vicinales.

Par deux fonctions vicinales, on entend deux fonctions qui sont portées par des carbones du cycle aromatique qui sont adjacents. Autrement dit, une fonction hydroxy est en position ortho par rapport à l'autre fonction hydroxy.

Selon un mode de réalisation particulier de l'invention, le polymère diénique fonctionnel porte plusieurs groupes aromatiques substitués par au moins deux fonctions hydroxy, deux des fonctions hydroxy étant vicinales.

De manière préférentielle, les fonctions hydroxy du groupe aromatique sont au nombre de 2.

Selon l'un quelconque des modes de réalisation de l'invention, les deux fonctions hydroxy vicinales sont de préférence respectivement en position méta et para par rapport à la liaison ou au groupe qui assure le rattachement du groupe aromatique à la chaîne, en particulier principale, du polymère diénique fonctionnel.

La position relative des fonctions hydroxy sur le groupe aromatique, à savoir vicinale, permet de conférer les bonnes propriétés d'adhésion au métal à la composition de caoutchouc.

Selon un mode de réalisation particulièrement préférentiel de l'invention, le groupe aromatique est un groupe dihydroxyaryle de formule (I) dans laquelle le symbole * représente un rattachement direct ou indirect à la chaîne, en particulier principale, du polymère diénique fonctionnel.

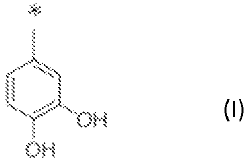

Par polymère diénique, on rappelle que doit être entendu un polymère qui comprend des unités diéniques et qui est généralement issu au moins en partie (i.e. un homopolymère ou un copolymère) de monomères diènes (monomères porteurs de deux doubles liaisons carbone-carbone, conjuguées ou non).
On entend plus particulièrement par polymère diénique :
(a) tout homopolymère d'un monomère diène conjugué ayant de 4 à 12 atomes de carbone;
(b) tout copolymère d'un monomère diène conjugué, en particulier tout copolymère d'un monomère diène conjugué et d'un monomère vinylique tel que l'éthylène, une α-monooléfine, un méthacrylate, un ester vinylique d'acide carboxylique, l'alcool vinylique, un éther vinylique, le monomère diène conjugué ayant de 4 à 12 atomes de carbone;
(c) tout homopolymère d'un monomère diène non conjugué ayant de 5 à 12 atomes de carbone;
(d) tout copolymère d'un monomère diène non conjugué, en particulier tout copolymère d'un monomère diène non conjugué et d'une monooléfine telle que l'éthylène ou une α-monooléfine, le monomère diène non conjugué ayant de 5 à 12 atomes de carbone ;
(e) un mélange des polymères définis en (a) à (d).

A titre de diènes conjugués conviennent notamment le 1,3-butadiène, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre d'a-monooléfine, on peut citer les alcènes et les composés vinylaromatiques, notamment ceux ayant 8 à 20 atomes de carbone, comme par exemple le styrène, l'ortho-, méta-, para-méthylstyrène.

A titre de diènes non conjugués conviennent par exemple ceux ayant de 5 à 12 atomes de carbone, tel que notamment l'hexadiène-1,4, le vinyle norbornène, l'éthylidène norbornène, le norbornadiène et le dicyclopentadiène.

A titre de (méth)acrylonitrile, conviennent l'acrylonitrile et le méthacrylonitrile.

A titre de (méth)acrylates, c'est à dire acrylates ou méthacrylates, on peut citer les esters acryliques dérivés de l'acide acrylique ou de l'acide méthacrylique avec des alcools ayant 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'ethyl-2-hexyle, le méthacrylate de méthyle, le méthacrylate d'éthyle, le méthacrylate de n-butyle, le méthacrylate d'isobutyle, l'acrylate de glycidyle et le méthacrylate de glycidyle.

A titre d'esters vinyliques d'acides carboxyliques, on peut citer par exemple l'acétate de vinyle et le propionate de vinyle, préférentiellement l'acétate de vinyle.

A titre d'éthers vinyliques conviennent par exemple ceux dont le groupement R de la fonction éther OR contient 1 à 6 atomes de carbone.

Dans la présente demande, le polymère diénique est dit fonctionnel puisqu'il porte au moins un groupe aromatique qui est substitué par les deux fonctions hydroxy.

De préférence, le polymère diénique fonctionnel est choisi dans le groupe des polymères constitué par les polybutadiènes, les polyisoprènes, les copolymères du 1,3-butadiène, les copolymères d'isoprène et leurs mélanges. A titre de copolymères de 1,3-butadiène ou d'isoprène, on peut tout particulièrement citer ceux résultant de la copolymérisation du 1,3-butadiène ou d'isoprène avec le styrène ou un (méth)acrylate, notamment l'acrylate ou le méthacrylate de glycidyle. L'homme du métier comprend bien que les polybutadiènes, les polyisoprènes, les copolymères du 1,3-butadiène, les copolymères d'isoprène utiles aux besoins de l'invention en tant que polymère diénique fonctionnel portent un ou plusieurs groupes aromatiques tels que définis selon l'un quelconque des modes de réalisation de l'invention.

Selon l'un quelconque des modes de réalisation de l'invention, les unités diéniques dans le polymère diénique fonctionnel représentent préférentiellement plus de 50%, plus préférentiellement plus de 70% en masse du polymère diénique fonctionnel.

Selon l'un quelconque des modes de réalisation de l'invention, le groupe aromatique porté par le polymère diénique fonctionnel est de préférence un groupe pendant de la chaîne polymère du polymère diénique fonctionnel.

Le groupe aromatique porté par le polymère diénique fonctionnel peut être en extrémité de la chaîne polymère du polymère diénique fonctionnel ou en dehors des extrémités de la chaîne polymère du polymère diénique fonctionnel.

Selon un mode de réalisation particulier de l'invention, le groupe aromatique est exclusivement porté en extrémité de chaîne de la chaîne polymère du polymère diénique fonctionnel, en particulier sur une seule extrémité ou sur chaque extrémité de la chaîne polymère du polymère diénique fonctionnel.

Le polymère diénique fonctionnel peut être synthétisé par les méthodes connues de l'homme du métier. Par exemple, on peut citer à titre non limitatif :
- La modification de polymères diéniques portant au moins un groupe aromatique substitué par au moins deux fonctions vicinales OR hydrolysables par déprotection de ces fonctions comme décrit dans les demandes de brevet WO2009/086490 A2 et WO2011/002994 A2, R représentant une chaîne carbonée ;
- La modification de polymères diéniques époxydés ou la modification de polymères diéniques portant au moins un groupe époxy pendant par un composé nucléophile à la fois porteur du groupe aromatique substitué par au moins deux fonctions vicinales hydroxy et porteur d'une fonction nucléophile comme par exemple décrit dans les demandes de brevet déposées sous les numéros FR14/60290 et FR14/60620 ;
- La modification de polymères diéniques portant en extrémité de chaine un groupe nucléophile par un composé à la fois porteur du groupe aromatique substitué par au moins deux fonctions vicinales hydroxy et porteur d'un groupe électrophile comme décrit par exemple dans la demande de brevet déposée sous le numéro FR15/577707.

La méthode de préparation du polymère diénique fonctionnel est choisie par l'homme du métier judicieusement selon que le groupe aromatique est en extrémité de chaîne du polymère diénique fonctionnel ou en dehors de ses extrémités de chaîne, selon la macrostructure du polymère diénique fonctionnel, notamment la valeur de sa masse molaire moyenne en nombre et de son indice de polydispersité, et selon la microstructure du polymère diénique fonctionnel, notamment des teneurs respectives des liaisons 1,4-cis, 1,4-trans et 1,2 de la partie diénique du polymère diénique fonctionnel.

Le taux de groupe aromatique dans le polymère diénique fonctionnel varie de préférence de 0.01 à 3 milliéquivalents par g (méq/g), plus préférentiellement de 0.15 à 2 méq/g, encore plus préférentiellement de 0.3 à 1.5 méq/g de polymère diénique fonctionnel. Ces plages de taux peuvent s'appliquer à l'un quelconque des modes de réalisation de l'invention.

Selon un mode de réalisation de l'invention, le polymère diénique fonctionnel est un élastomère. Lorsqu'il est élastomère, le polymère diénique fonctionnel présente de préférence une masse molaire moyenne en nombre supérieure à 80000 g/mol.

Selon un autre mode de réalisation de l'invention, le polymère diénique fonctionnel présente une masse molaire moyenne en nombre allant de 1000 à 80000 g/mol, préférentiellement de 1000 à 30000 g/mol, plus préférentiellement de 1000 à 10000 g/mol, encore plus préférentiellement de 1000 à 5000 g/mol. Généralement, ces masses molaires moyennes en nombre, en particulier les plus faibles, peuvent s'avérer trop faibles selon la microstructure du polymère diénique fonctionnel pour lui conférer des propriétés élastomères.

La matrice polymère a pour autre caractéristique essentielle de comprendre un autre polymère, un élastomère diénique Ed, différent du polymère diénique fonctionnel. Il est entendu que l'élastomère diénique Ed ne répond pas à la définition du polymère diénique fonctionnel. De préférence, l'élastomère diénique Ed est dépourvu du groupe aromatique portant les deux groupes vicinaux hydroxy. Le mode de réalisation préférentiel selon lequel l'élastomère diénique Ed est dépourvu du groupe aromatique portant les deux groupes vicinaux hydroxy peut s'appliquer à l'un quelconque des modes de réalisation de l'invention. On entend par un élastomère diénique un ou plusieurs élastomères diéniques qui se différencient les uns des autres par leur microstructure ou leur macrostructure. L'élastomère diénique Ed représente plus de 50% en masse de la matrice polymère pour conférer à la matrice polymère le caractère caoutchouteux de la composition de caoutchouc.

Par élastomère (ou indistinctement "caoutchouc", les deux termes étant considérés comme synonymes) diénique, doit être compris de manière connue un polymère diénique tel que défini plus haut pour ce qui est de sa microstructure.

Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

L'élastomère diénique Ed peut être étoilé, couplé, fonctionnalisé ou non, de manière connue en soi, au moyen d'agents de fonctionnalisation, de couplage ou d'étoilage connus de l'homme du métier.

Selon l'un quelconque des modes de réalisation, l'élastomère diénique Ed est de préférence un élastomère diénique fortement insaturé, de manière plus préférentielle choisi dans le groupe des élastomères fortement insaturés constitué par les polybutadiènes, les polyisoprènes, les copolymères du 1,3-butadiène, les copolymères d'isoprène et leurs mélanges. De manière encore plus préférentielle, l'élastomère diénique Ed est un polyisoprène présentant plus de 90% en masse de liaison 1,4-cis. Mieux l'élastomère diénique est le caoutchouc naturel.

Quant au polymère diénique fonctionnel, il représente au plus 30% en masse de la matrice polymère, de préférence entre 5 et 30% en masse de la matrice polymère. Au-delà de 30%, on perd les propriétés intrinsèques propres à l'élastomère diénique qui confère à la composition de caoutchouc ses propriétés, telle que l'élasticité, la cohésion, le collant à cru, la cristallisation sous tension selon la microstructure et la macrostructure de l'élastomère diénique Ed. En deçà de 5%, l'amélioration des propriétés d'adhésion peut s'avérer insuffisante selon l'application envisagée de la composition de caoutchouc.

Selon un mode de réalisation de l'invention, l'élastomère diénique Ed et le polymère diénique fonctionnel représentent au moins 90% en masse de la matrice polymère. Mieux la matrice polymère consiste en le polymère diénique fonctionnel et l'élastomère diénique Ed.

Selon un mode de réalisation particulièrement préférentiel de l'invention, la composition de caoutchouc comprend une charge renforçante.

La charge renforçante est généralement utilisée pour améliorer par exemple la cohésion ou la rigidité de la matrice polymère. La charge renforçante est une charge connue pour ses capacités à renforcer une matrice polymère contenant un polymère diénique, plus particulièrement élastomère. La charge renforçante est typiquement une charge renforçante conventionnellement utilisée dans les compositions de caoutchouc utilisable pour la fabrication de pneumatiques. La charge renforçante est par exemple une charge organique telle que du noir de carbone, une charge inorganique renforçante telle que de la silice à laquelle est associé de manière connue un agent de couplage, ou encore un mélange de ces deux types de charge. La charge renforçante est de préférence un noir de carbone.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

Le taux de charge renforçante est choisi par l'homme de l'art selon l'application envisagée du composite et selon la nature de la charge renforçante, notamment de la valeur de sa surface spécifique BET. Par exemple pour une application de la composition dans le pneumatique, notamment comme structure de renforcement ou armature de renforcement dans le pneumatique, le taux de charge renforçante est préférentiellement compris dans un domaine allant de 20 parties à 80 parties pour 100 parties de la matrice polymère. En deçà de 20 parties, le renforcement de la matrice polymère peut être insuffisant. Au-delà de80 parties, il existe un risque d'augmentation de l'hystérèse de la matrice polymère qui peut entraîner un échauffement de la composition qui peut conduire à une dégradation des performances de la composition.

Selon autre mode de réalisation particulièrement préférentiel de l'invention, la composition de caoutchouc comprend un système de réticulation de la matrice polymère. Au cours de la fabrication du composite, le système de réticulation est destiné à réagir pour causer la réticulation de la matrice polymère, en général après la mise en contact des éléments de renforcement avec la matrice polymère contenant le système de réticulation et éventuellement la charge renforçante et après sa mise en forme. La réticulation permet généralement d'améliorer les propriétés élastiques de la matrice polymère. Le système de réticulation peut être un système de vulcanisation ou être à base d'un ou plusieurs composés peroxydes, par exemple conventionnellement utilisés dans les compositions de caoutchouc utilisables pour la fabrication de pneumatique.

Le système de vulcanisation proprement dit est à base de soufre (ou d'un agent donneur de soufre) et généralement d'un accélérateur primaire de vulcanisation. A ce système de vulcanisation de base peuvent venir s'ajouter, par exemple incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine). Le soufre est utilisé à un taux préférentiel de 0.5 à 12 parties pour cent parties de la matrice polymère (pcmp), en particulier de 1 à 10 pcmp. L'accélérateur primaire de vulcanisation est utilisé à un taux préférentiel compris entre 0.5 et 10 pcmp, plus préférentiellement compris entre 0.5 et 5 pcmp. On peut utiliser comme accélérateur (primaire ou secondaire) tout composé susceptible d'agir comme accélérateur de vulcanisation des polymères diéniques, en particulier élastomères diéniques, en présence de soufre, notamment des accélérateurs du type thiazoles ainsi que leurs dérivés, des accélérateurs de types thiurames, dithiocarbamates de zinc. De préférence, on utilise un accélérateur primaire du type sulfénamide.

Lorsque la réticulation chimique est effectuée au moyen d'un ou plusieurs composés peroxydes, le ou lesdits composés peroxydes représentent de 0.01 à 10 pcmp. A titre de composés peroxydes utilisables comme système de réticulation chimique, on peut citer les acyl peroxydes, par exemple le benzoyl peroxyde ou le p-chlorobenzoyl peroxyde, les cétones peroxydes, par exemple le méthyl éthyl cétone peroxyde, les peroxyesters, par exemple le t-butylperoxyacétate, le t-butylperoxybenzoate et le t-butylperoxyphtalate, les alkyl peroxides, par exemple le dicumyl peroxyde, le di-t-butyl peroxybenzoate et le 1,3-bis(t-butyl peroxyisopropyl)benzène, les hydroperoxydes, par exemple le t-butyl hydroperoxyde.

La composition de caoutchouc peut comporter également tout ou partie des additifs usuels habituellement dispersés dans les matrices polymères contenant un polymère diénique, en particulier élastomère. Le choix des additifs et de leur taux est fait par l'homme du métier selon l'application envisagée de la composition de caoutchouc. Par exemple pour une application de la composition de caoutchouc dans le pneumatique, notamment dans une structure de renforcement ou armature de renforcement dans le pneumatique, peuvent convenir comme additifs des pigments, des agents de protection tels que cires anti-ozone, anti-ozonants chimiques, anti-oxydants, des agents plastifiants ou des agents de mise en œuvre.

La première phase non-productive et la phase productive sont des étapes de travail mécanique, notamment par malaxage, bien connues de l'homme du métier dans la fabrication des compositions de caoutchouc. La première phase non-productive se distingue généralement de la phase productive en ce que le travail mécanique s'effectue à haute température, jusqu'à une température maximale comprise entre 110°C et 190°C, de préférence entre 130°C et 180°C. La phase productive qui suit la phase non-productive, en général après une étape de refroidissement, se définit par un travail mécanique à plus basse température, typiquement inférieure à 110°C, par exemple entre 40°C et 100°C, phase de finition au cours de laquelle est incorporé le système de réticulation.

La charge renforçante, le système de réticulation et les additifs sont répartis généralement dans la matrice polymère par leur incorporation dans la matrice polymère. Par exemple, la charge renforçante peut être incorporée à la matrice polymère par un mélangeage mécanique, en particulier un malaxage thermomécanique, éventuellement en présence des additifs précédemment cités. La température de mélangeage est choisie judicieusement par l'homme du métier en fonction de la sensibilité thermique de la matrice polymère, de sa viscosité et de la nature de la charge renforçante. Le système de réticulation est incorporé à la matrice polymère typiquement à une température inférieure à la température à laquelle se produit la réticulation pour permettre sa dispersion dans la matrice polymère et la mise en forme ultérieure du composite avant la réticulation de la matrice polymère. Généralement, le système de réticulation est incorporé à la matrice polymère après l'incorporation de la charge renforçante et des autres additifs dans la matrice polymère.

La composition de caoutchouc peut être utilisée dans un article semi-fini comportant des éléments de renforcement enrobés dans la composition de caoutchouc conforme à l'invention, lesquels éléments de renforcement présentent une surface métallique destinée à entrer au contact de la composition de caoutchouc. De préférence les éléments de renforcement sont agencés généralement côte à côte selon une direction principale. Pour une application envisagée dans le pneumatique, l'article semi-fini est préférentiellement une armature de renforcement pour pneumatique, telle qu'une armature de carcasse ou une armature de sommet.

Les éléments de renforcement (aussi appelés renforts) ont pour caractéristique essentielle de présenter une surface métallique. La surface métallique de chaque renfort peut être tout ou partie de la surface totale du renfort et est destinée à entrer au contact de la composition de caoutchouc conforme à l'invention.

Seule une partie du renfort est métallique, cette partie étant par définition de l'invention au moins constituée de la surface métallique telle que définie précédemment, ou bien c'est l'intégralité du renfort qui est métallique. De préférence la totalité du renfort est en métal.

Selon une première variante de l'invention, la surface métallique du renfort est faite d'un matériau différent du restant du renfort. Autrement dit, le renfort est fait d'un matériau qui est tout ou en partie recouvert par une couche métallique qui constitue la surface métallique. Le matériau tout ou en partie recouvert par la surface métallique est de nature métallique ou non métallique, de préférence métallique.

Selon une deuxième variante de l'invention, le renfort est fait d'un même matériau, auquel cas le renfort est fait d'un métal qui est identique au métal de la surface métallique.

Ces deux variantes s'appliquent à l'un quelconque des modes de réalisation de l'invention concernant l'article semi-fini.

Selon un mode de réalisation avantageux de l'invention, la surface métallique comprend du fer, du cuivre, du zinc, de l'étain, de l'aluminium, du cobalt ou du nickel.

Selon un mode de réalisation particulièrement préférentiel de l'invention, le métal de la surface métallique est un métal choisi dans le groupe constitué par le fer, le cuivre, le zinc, l'étain, l'aluminium, le cobalt, le nickel et les alliages comportant au moins un de ces métaux. Les alliages peuvent être par exemple des alliages binaires ou ternaires, comme l'acier, le bronze et le laiton. De préférence, le métal de la surface métallique est le fer, le cuivre, l'étain, le zinc ou un alliage comportant au moins un de ces métaux. De manière plus préférentielle, le métal de la surface métallique est l'acier, le laiton (alliage Cu-Zn) ou le bronze (alliage Cu-Sn).

Dans la présente demande, l'expression « le métal de la surface métallique est le métal ci-après désigné » revient à dire que la surface métallique est en métal ci-après désigné. Par exemple l'expression « le métal de la surface métallique est le fer » écrite plus haut signifie que la surface métallique est en fer. Certains métaux étant sujets à l'oxydation au contact de l'air ambiant, le métal peut être en partie oxydé à l'exception de l'acier inoxydable.

Lorsque la surface métallique est en acier, l'acier est préférentiellement un acier au carbone ou un acier inoxydable. Lorsque l'acier est un acier au carbone, sa teneur en carbone est de préférence comprise entre 0.01% et 1.2% ou entre 0.05% et 1.2%, ou bien encore entre 0.2% et 1.2%, notamment entre 0.4% et 1.1%. Lorsque l'acier est inoxydable, il comporte de préférence au moins 11% de chrome et au moins 50% de fer.

Le renfort peut se présenter sous différentes formes, préférentiellement sous la forme d'un fil unitaire (monofil) ou d'un assemblage de fils, que ces fils soient tordus entre eux (par exemple, sous la forme d'un câble) ou essentiellement parallèles entre eux.

Dans l'article semi-fini et le pneumatique conformes à l'invention, le renfort se présente plus préférentiellement sous la forme d'un fil unitaire ou d'un assemblage de fils, par exemple d'un câble ou d'un toron fabriqué avec des dispositifs et procédés de câblage ou toronnage connus de l'homme du métier, qui ne sont pas décrits ici pour la simplicité de l'exposé.

Lorsque les composites de l'invention sont utilisés pour renforcer des armatures de carcasse ou de sommet de pneumatiques radiaux, les renforts utilisés sont de préférence des assemblages (torons ou câbles) de fils fins en acier au carbone ou en acier inoxydable ayant :
- une résistance en traction supérieure à 2000 MPa, plus préférentiellement supérieure à 2500 MPa, en particulier supérieure à 3000 MPa ; l'homme du métier sait comment fabriquer des fils fins présentant une telle résistance, en ajustant notamment la composition de l'acier et les taux d'écrouissage final de ces fils ;
- pour un bon compromis résistance/tenue en flexion/faisabilité, un diamètre compris entre 0.10 et 0.40 mm, plus préférentiellement entre 0.10 et 0.30 mm environ lorsque le composite est destiné à renforcer une armature de carcasse, entre 0.20 et 0.40 mm environ lorsque le composite est destiné à renforcer une armature de sommet.

Chacun des modes de réalisation définissant le renfort s'applique à l'un quelconque des modes de réalisation de l'article semi-fini.

L'article semi-fini peut être fabriqué par un procédé qui comprend les étapes suivantes :
- Réaliser deux couches de la composition de caoutchouc,
- Prendre chaque élément de renforcement en sandwich dans les deux couches en le déposant entre les deux couches,
- Le cas échéant cuire.

La réalisation des couches peut se faire par calandrage. Au cours de la cuisson de l'article semi-fini, la matrice polymère est réticulée, notamment par vulcanisation ou par des peroxydes.
Lorsque l'article semi-fini est destiné à être utilisé en tant qu'armature de renforcement dans un pneumatique, la cuisson de l'article semi-fini a lieu généralement lors de la cuisson de l'enveloppe du pneumatique.

L'invention concerne la composition de caoutchouc, l'article semi-fini et le pneumatique à l'état cru (avant réticulation de la matrice polymère) ou à l'état cuit (après réticulation de la matrice polymère).

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Préparation des polymères diéniques fonctionnels utiles aux besoins de l'invention :

### Analyse RMN du proton :

L'analyse RMN du proton est utilisée pour déterminer la microstructure des polymères utilisés ou synthétisés. La teneur en le groupe 3,4-dihydroxyaryle dans le polymère diénique fonctionnel est donnée en pourcentage molaire (% mol, c'est-à-dire pour 100 moles d'unité monomère du polymère diénique) ou en milliéquivalent par gramme de polymère diénique fonctionnel (méq/g).

Les spectres sont acquis sur un spectromètre 500 MHz BRUKER équipé d'une sonde " large bande " BBlz-grad 5 mm. L'expérience RMN 1H quantitative, utilise une séquence simple impulsion 30° et un délai de répétition de 3 secondes entre chaque acquisition. Les échantillons sont solubilisés dans le chloroforme deutéré (CDCl₃) ou le méthanol deutéré (MeOD).

### Analyse SEC :

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité ou polydispersité (lp = Mw/Mn) calculé via un étalonnage dit de MOORE.

Préparation du polymère: Il n'y a pas de traitement particulier de l'échantillon de polymère avant analyse. Celui-ci est simplement solubilisé, dans du tétrahydrofuranne (THF) qui contient 1%vol. de diisopropylamine, 1%vol. de triéthylamine et 0.1%vol. d'eau distillée, à une concentration d'environ 1 g/l. Puis la solution est filtrée sur filtre de porosité 0,45µm avant injection.

Analyse SEC: L'appareillage utilisé est un chromatographe « WATERS alliance ». Le solvant d'élution est du tétrahydrofuranne qui contient 1%vol. de diisopropylamine, 1%vol. de triéthylamine. Le débit est de 0.7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER».

Les masses molaires moyennes calculées sont relatives à une courbe d'étalonnage réalisée à partir de polystyrènes étalons commerciaux « PSS READY CAL-KIT ».

### II.1.1- par réaction de modification de copolymère d'isoprène et de méthacrylate de glycidyle par un composé nucléophile à la fois porteur du groupe 3,4-dihydroxyaryle et porteur d'une fonction nucléophile, l'acide 3,4-dihydroxyhydrocinnamique :

Au préalable sont préparés respectivement les copolymères d'isoprène et de méthacrylate de glycidyle A, B et C par polymérisation radicalaire selon le protocole suivant :
Dans un réacteur autoclave sont introduits sous un courant d'argon le méthacrylate de glycidyle (MAGLY), l'isoprène, le toluène et l'azobisisobutyronitrile (AIBN). Le mélange réactionnel est chauffé et agité à une température T et pendant une durée t. En fin de polymérisation, le copolymère est précipité dans le méthanol. Le copolymère est analysé par RMN 1H. Pour chacun des copolymères, les quantités de réactifs et de solvant, la température T et la durée t sont indiquées dans le tableau la.

**Tableau 1a**

| Copolymère | A | B | C |
|---|---|---|---|
| MAGLY | 30.0 g | 17.0 g | 20.0 g |
| isoprène | 129.2 g | 73.2 g | 86.1 g |
| toluène | 100.0 g | 100.0 g | 70.0 g |
| AlBN | 3.67 g | 4.16 g | 3.67 g |
| T | 70°C | 70°C | 70°C |
| t | 960 min | 1200 min | 960 min |

Le tableau 1b indique la microstructure des copolymères A, B et C préparés, exprimée en pourcentage molaire.

**Tableau 1b :**

| Copolymère | A | B | C |
|---|---|---|---|
| MAGLY | 12 | 14 | 12 |
| isoprène | 88 | 86 | 88 |

Le copolymère A ou B ou C est ensuite modifié par réaction avec un composé portant un groupe 3,4-dihydroxyaryle, l'acide 3,4-dihydroxyhydrocinnamique selon le protocole suivant :
Dans un ballon monocol surmonté d'un réfrigérant, le copolymère d'isoprène et de méthacrylate de glycidyle (A ou B ou C) est solubilisé dans du dioxane. L'acide 3,4-dihydroxyhydrocinnamique est ajouté. Puis le milieu réactionnel est agité sous agitation magnétique et chauffé pendant 72h à 120°C. Le milieu réactionnel est ensuite laissé revenir à température ambiante, puis le polymère est coagulé dans l'eau, filtré, puis solubilisé à nouveau dans le dichlorométhane pour être séché sur Na₂SO₄. La solution est enfin évaporée à sec.

Pour chacun des copolymères A et B et C d'isoprène et de méthacrylate de glycidyle, les quantités de réactifs et de solvant utilisées dans la réaction de modification du copolymère par l'acide 3,4-dihydroxyhydrocinnamique sont indiquées dans le tableau 2. Figurent également dans le tableau 2 la microstructure et la macrostructure du copolymère modifié AF et BF et CF respectivement.

**Tableau 2**

| Polymère diénique fonctionnel | AF | BF | CF |
|---|---|---|---|
| Copolymère A | 50.0 g | 0 | 0 |
| Copolymère B | 0 | 42.4 g | 0 |
| Copolymère C | 0 | 0 | 30.3 g |
| Acide 3,4-dihydroxyhydrocinnamique | 16.1 g | 10.9 g | 9.74 g |
| dioxane | 200.0 g | 65.0 g | 100.0 g |
| Mn | 7800 | 4700 | 5000 |
| Mw | 30800 | 9160 | 9500 |

| groupe 3,4-dihydroxyaryle | | | |
|---|---|---|---|
| (% mol) | 9.4 | 7.4 | 4.6 |
| (méq/g) | 1.03 | 0.86 | 0.58 |

### 11.1.2- par réaction de modification de copolymère de 1,3-butadiène, de styrène et de méthacrylate de glycidyle par l'acide 3,4-dihydroxyhydrocinnamique :

Au préalable sont préparés les copolymères 1,3-butadiène, de styrène et de méthacrylate de glycidyle, respectivement D et E, par polymérisation radicalaire selon le protocole suivant :
La polymérisation radicalaire en émulsion est effectuée dans une bouteille capsulée sous agitation modérée et sous atmosphère inerte d'azote.

Dans une bouteille sont introduits le persulfate de potassium K₂S₂O₈ et le chlorure d'hexadécyltriméthylammonium. La bouteille est capsulée puis barbotée à l'azote pendant 10 min. Sont ensuite introduits successivement dans la bouteille les composés et solutions suivants aux taux indiqués dans le tableau 3 (ces solutions ayant été barbotées au préalable pour éliminer toute trace d'oxygène) :
- eau
- solution de HPO₄Na₂ à 100g/L (solution HPO₄Na₂)
- solution de H₂PO₄NH₄ à 100g/L (solution de H₂PO₄NH₄)
- solution à 0.7 mol/L de tert-dodécylmercaptan dans le styrène (solution tert-dodécylmercaptan)
- styrène
- méthacrylate de glycidyle
- 1,3- butadiène

Le milieu réactionnel est mis à agiter et chauffé à 40°C. La polymérisation est stoppée au bout de 60% de conversion par l'ajout de 1mL d'une solution de résorcinol à 100g/L dans l'eau.

Le copolymère est précipité dans un mélange acétone/méthanol (50/50 v/v).

Le copolymère est séché par étuvage sous vide (200 torr) à 50 °C.

Les quantités de réactifs, composés et solutions sont indiquées dans le tableau 3 pour chacun des copolymères D et E.

**Tableau 3**

| Copolymère | D | E |
|---|---|---|
| K₂S₂O₈ (g) | 0.12 | 0.3 |
| chlorure d'hexadécyltriméthylammonium (g) | 0.5 | 1.25 |
| eau (g) | 90 | 225 |
| solution HPO₄Na₂ (mL) | 4.5 | 11.2 |
| solution de H₂PO₄NH₄ (mL) | 1.9 | 4.7 |
| solution tert-dodécylmercaptan (mL) | 0.44 | 1.1 |
| styrène (mL) | 2. | 5.2 |
| 1,3-butadiène (mL) | 9.5 | 23.8 |
| Méthacrylate de glycidyle (mL) | 1.9 | 4.6 |

Le tableau 3b indique la microstructure des copolymères D et E préparés, exprimée en pourcentage molaire.

**Tableau 3b :**

| Copolymère | D | E |
|---|---|---|
| 1,3-butadiène | 78 | 76 |
| MAGLY | 9 | 10 |

Le copolymère D ou E est ensuite modifié par réaction avec un composé portant un groupe 3,4-dihydroxyaryle, l'acide 3,4-dihydroxyhydrocinnamique selon le protocole suivant :
Dans un ballon tricol surmonté d'un réfrigérant, le copolymère de 1,3-butadiène, de styrène et de méthacrylate de glycidyle est solubilisé dans du dioxane. L'acide 3,4-dihydroxyhydrocinnamique (10 équivalents par rapport au nombre de moles de fonctions époxydes) est ajouté. Puis le milieu réactionnel est agité sous agitation mécanique et chauffé pendant 72h à 110°C sous atmosphère inerte. Le milieu réactionnel est ensuite laissé revenir à température ambiante sous atmosphère inerte puis le polymère est coagulé dans l'eau et séché par étuvage sous vide (200 torr) à 60 °C.

Les quantités de réactifs et de solvant utilisées dans la réaction de modification des copolymères D et E par l'acide 3,4-dihydroxyhydrocinnamique sont indiquées dans le tableau 4. Figurent également dans le tableau 4 la microstructure et la macrostructure des copolymères modifiés, respectivement DF et EF.

**Tableau 4**

| Polymère diénique fonctionnel | DF | EF |
|---|---|---|
| Copolymère C (g) | 3.06 | 0 |
| Copolymère D (g) | 0 | 3.04 |
| Acide 3,4-dihydroxyhydrocinnamique (g) | 5.06 | 5.02 |
| Dioxane (mL) | 30 | 30 |
| Mn | 29000 | 54500 |
| Mw | 260140 | 634290 |

| groupe 3,4-dihydroxyaryle | | |
|---|---|---|
| (% mol) | 8.9 | 5.8 |
| (méq/g) | 1.05 | 0.71 |

### 11.1.3- par réaction de modification de polyisoprène époxydé par un composé nucléophile à la fois porteur du groupe 3,4-dihydroxyaryle et porteur d'une fonction nucléophile, le 11-[éthoxy(hydroxy)phosphoryl]undécyl 3-(3,4-dihydroxyphényl)propanoate :

Pour la réaction de modification est utilisé soit un polyisoprène de synthèse époxydé, soit un caoutchouc naturel époxydé. Le polyisoprène de synthèse époxydé est préparé par époxydation d'un polyisoprène de synthèse:

Protocole pour la préparation du polyisoprène de synthèse : Dans un réacteur de 250 mL, maintenu sous pression d'azote de 2 bars, contenant 105 mL de méthylcyclohexane, sont injectés 10.21 g d'isoprène. 4.5 mL de n-butyllithium à 1.34 mol/L sont alors ajoutés. Le milieu est chauffé à 50°C pendant 45 min pour atteindre un taux de conversion du monomère de 95%. Ce taux est déterminé par pesée d'un extrait séché à 110°C, sous la pression réduite de 200 mmHg. La polymérisation est stoppée par ajout d'un excès de méthanol par rapport au lithium. La solution de polymère est filtrée afin d'éliminer les résidus de lithine présents dans le milieu. Enfin, la solution de polymère est soumise à un traitement anti-oxydant par addition de 0,2 parties pour cent parties de polymère de 4,4'-méthylène-bis-2,6-tert-butylphénol et de 0,2 parties pour cent parties de polymère de N-(l,3-diméthylbutyl)-N'-phényl-p-phénylènediamine, puis le polymère est séché par étuvage sous vide à 60°C pendant 2 jours. Le polyisoprène présente une masse molaire moyenne en masse de 3000 g/mol, un indice de polydispersité (Ip) de 1.06, et 88% en mole de liaison 1,4-cis.

Protocole pour l'époxydation du polyisoprène de synthèse : Dans un ballon bicol, le polyisoprène de synthèse est dissous à une concentration massique de 6% dans du méthylcyclohexane. Le mélange est agité et chauffé à 35°C, l'acide formique (1 équivalent par rapport au nombre de moles d'unités isoprène à époxyder) est alors introduit. Le mélange est ensuite chauffé à 47°C, puis l'eau oxygénée (1 équivalent par rapport au nombre de moles d'unités isoprène à époxyder) est introduite goutte à goutte via une ampoule de coulée. Le milieu est ensuite chauffé à 50°C pendant 4h. En fin de réaction, le milieu est neutralisé par introduction d'une solution de soude (1 équivalent par rapport au nombre de moles d'acide formique introduit). Le milieu réactionnel est alors lavé trois fois à l'eau via une ampoule à décanter. La phase organique est ensuite séchée sur MgSO₄ puis filtrée. Le polymère époxydé est récupéré par séchage de la phase organique en étuve à 45°C pendant 48h. Le taux d'époxydation est de 8.4% molaire.

Le polyisoprène de synthèse époxydé, ci-après nommé G, est ensuite modifié par réaction avec un composé portant un groupe 3,4-dihydroxyaryle, le 11-[éthoxy(hydroxy)phosphoryl]undécyl 3-(3,4-dihydroxyphényl)propanoate selon le protocole suivant :
Dans un ballon monocol sont introduits 15 g de E, 9,71 g de 11-[éthoxy(hydroxy)phosphoryl]undécyl 3-(3,4-dihydroxyphényl)propanoate et 170 mL de dioxane. Le milieu réactionnel est mis sous agitation et chauffé à 90°C pendant 20 heures. En fin de réaction, le dioxane est éliminé à l'évaporateur rotatif. La substance obtenue est dissoute dans 200 mL de dichlorométhane, le milieu est mis sous agitation puis une solution de NaHCO₃ dans l'eau à 1M est introduite (1 équivalent par rapport au nombre de moles de 11-[éthoxy(hydroxy)phosphoryl]undécyl 3-(3,4-dihydroxyphényl)propanoate). Le milieu est agité pendant 1h puis une extraction est réalisée via une ampoule à décanter à l'aide d'un mélange eau salée / acétone. La phase organique est ensuite séchée sur MgSO₄ puis filtrée. Le polymère modifié, ci-après nommé GF, est récupéré par séchage de la phase organique en étuve à 45°C pendant 48h. Dans le tableau 5 figurent la microstructure et la macrostructure du polymère modifié, GF.

Le caoutchouc naturel époxydé, ci-après nommé H, est un caoutchouc naturel présentant des groupes époxyde dispersés aléatoirement le long de la chaîne principale du polymère, commercialisé sous l'appellation « Ekoprena », le taux molaire d'époxydation étant de 25%, la viscosité Mooney de 75±15.

Il est ensuite modifié par réaction avec un composé portant un groupe 3,4-dihydroxyaryle, le 11-[éthoxy(hydroxy)phosphoryl]undécyl 3-(3,4-dihydroxyphényl)propanoate selon le protocole suivant :
Dans un ballon monocol sont introduits 20 g de G, 6.04 g de 11-[éthoxy(hydroxy)phosphoryl]undécyl 3-(3,4-dihydroxyphényl)propanoate et 500 mL de toluène. Le milieu réactionnel est mis sous agitation magnétique et chauffé à 90°C pendant 24h. En fin de réaction, le polymère modifié, ci-après nommé HF, est séché par étuvage, puis mis sous agitation dans 1 L d'éthanol pendant 24h. Après filtration, le polymère modifié est séché par étuvage à 60°C pendant 8h.

Dans le tableau 5 figurent la microstructure et la macrostructure du polymère modifié, HF.

**Tableau 5**

| Polymère diénique fonctionnel | GF | HF |
|---|---|---|
| Mn | 2600 | > 150000 |
| Mw | 4500 | > 650000 |

| groupe dihydroxyaryle | | |
|---|---|---|
| (% mol | 4.7 | 4 |
| (méq/g) | 0.54 | 0.48 |

### 11.1.4- par réaction de modification de polybutadiène α,ω dihydroxylé par un composé à la fois porteur du groupe 3,4-dihydroxyaryle et porteur d'un groupe électrophile, l'acide 3,4-dihydroxyhydrocinnamique :

Le polybutadiène α,ω dihydroxylé utilisé dans la réaction de modification est le PolyBd R20 LM de Cray Valley et est nommé ci-après J. Il est modifié selon le protocole suivant :

Dans un ballon monocol sont introduits 20.0 g de PolyBd R20 LM, 8.05 g (2.6 eq) d'acide 3,4-dihydroxyhydrocinnamique, 0.42 g (0.1 eq) d'acide p-toluènesulfonique et 250 mL de toluène. Le ballon est équipé d'un Dean-Stark, puis le mélange est placé sous agitation à 140°C pendant 48 heures.

En fin de réaction, le toluène est éliminé par évaporation sous vide. Le polybutadiène téléchélique est alors solubilisé dans le dichlorométhane ; deux extractions aqueuses successives permettent d'éliminer l'acide 3,4-dihydroxyhydrocinnamique en excès ainsi que l'acide p-toluènesulfonique. La phase chlorée est séchée sur sulfate de sodium anhydre. Le dichlorométhane est ensuite éliminé par évaporation sous vide. Dans le tableau 6 figurent la microstructure et la macrostructure du polymère modifié, JF.

**Tableau 6**

| Polymère diénique fonctionnel | JF |
|---|---|
| Mn | 3750 |
| Mw | 29100 |

| groupe dihydroxyaryle | |
|---|---|
| (% mol) | 1.8 |
| (méq/g) | 0.46 |

### II.2-Préparation des compositions de caoutchouc :

Les compositions de caoutchouc préparées se distinguent les unes des autres par la matrice polymère, en raison de la microstructure, de la macrostructure et du taux de polymère diénique fonctionnel utilisé dans la matrice polymère. Pour toutes les compositions de caoutchouc, la matrice polymère consiste en un mélange de caoutchouc naturel et de polymère diénique fonctionnel, le polymère diénique fonctionnel représentant 10, 15 ou 25% en masse de la matrice polymère. Le polymère diénique fonctionnel utilisé dans la matrice polymère, ainsi que son taux sont indiqués dans les tableaux 7 à 9.

Pour préparer la composition de caoutchouc, on incorpore à la matrice polymère une charge renforçante, un noir de carbone (le N326), et un système de réticulation, un peroxyde (le dicumyl peroxyde) selon le protocole décrit ci-après. Le taux de noir de carbone est de 50 parties pour 100 parties de matrice polymère, celui de peroxyde 5 parties pour 100 parties de matrice polymère.

On introduit dans un mélangeur interne (taux de remplissage final : environ 70% en volume), dont la température initiale de cuve est d'environ 60°C, successivement le caoutchouc naturel, le noir de carbone et le polymère diénique fonctionnel. On conduit alors un travail thermomécanique (phase non-productive) jusqu'à atteindre une température maximale de « tombée » de 150°C. On récupère le mélange ainsi obtenu, on le refroidit puis on incorpore au mélange le système de réticulation sur un mélangeur externe (homo-finisseur) à 30°C, en mélangeant le tout (phase productive).

### II.3-Préparation des éprouvettes :

La qualité de la liaison entre la composition de caoutchouc et le renfort est déterminée par un test dans lequel on mesure la force nécessaire pour extraire le renfort de la composition de caoutchouc réticulée. Le renfort se présente sous la forme de tronçons de fils unitaires A cette fin, on prépare des éprouvettes contenant d'une part des fils unitaires métalliques à titre de renfort présentant une surface métallique et d'autre part une composition de caoutchouc réticulée.

Les compositions de caoutchoucs décrites dans le paragraphe II.2 sont utilisées pour confectionner des éprouvettes selon le protocole suivant :
On confectionne un bloc de caoutchouc constitué de deux plaques, appliquées l'une sur l'autre avant cuisson. Les deux plaques du bloc consistent en la même composition de caoutchouc. C'est lors de la confection du bloc que les fils unitaires sont emprisonnés entre les deux plaques à l'état cru, à égale distance et en laissant dépasser de part et d'autre de ces plaques une extrémité du fil unitaire de longueur suffisante pour la traction ultérieure. Le bloc comportant les fils unitaires est alors placé dans un moule adapté aux conditions de tests visées et laissées à l'initiative de l'homme de l'art ; à titre d'exemple, dans le cas présent, la cuisson du bloc est réalisée à 160°C pendant un temps variant de 25 min à 60 min selon la composition sous pression de 5.5 tonnes.
Les fils unitaires sont des fils en acier clair (c'est-à-dire non revêtu) ou en acier recouvert de laiton ou de bronze. Leur diamètre est de 1.75 mm, excepté pour les fils bronzés pour lesquels le diamètre est de 1.30 mm ; l'épaisseur du revêtement en laiton de 200 nm à 1 µm, l'épaisseur du revêtement en bronze de 50 nm à 0.1 µm.

Pour chacune des éprouvettes ainsi préparées, les tableaux 7 à 9 indiquent :
- lequel des polymères diéniques fonctionnels AF, BF, CF, DF, EF, GF, HF et JF a été utilisé
- la fraction massique de polymère diénique fonctionnel dans la matrice polymère
- le métal de la surface métallique du fil unitaire.

Chaque éprouvette est référencée par un chiffre arabe, suivi d'une lettre minuscule, par exemple la. A un chiffre arabe correspond un polymère diénique fonctionnel. La lettre minuscule indique la nature du métal de la surface métallique du fil unitaire : a pour le laiton, b pour l'acier et c pour le bronze.

Les éprouvettes ainsi préparées correspondent à l'utilisation de compositions de caoutchouc conformes à l'invention.

### II.4-Résultats :

### Test d'adhésion :

A l'issue de la cuisson, l'éprouvette ainsi constituée du bloc réticulé et des fils unitaires est mise en place dans les mâchoires d'une machine de traction adaptée pour permettre de tester chaque tronçon isolément, à une vitesse et une température données (par exemple, dans le cas présent, à 100 mm/min et température ambiante).

On caractérise les niveaux d'adhésion en mesurant la force dite d'arrachement pour arracher les tronçons de l'éprouvette.

Les résultats sont exprimés en base 100 par rapport à une éprouvette témoin qui contient des fils unitaires de nature identique à l'éprouvette testée et qui contient une composition de caoutchouc, dite témoin, dont la matrice polymère consiste en du caoutchouc naturel (autrement dit la fraction massique du polymère diénique fonctionnel dans la matrice polymère est de 0% dans la composition de caoutchouc témoin). Excepté l'absence de polymère diénique fonctionnel, la composition de caoutchouc témoin est fabriquée selon le même protocole que les compositions de caoutchouc conformes à l'invention. L'éprouvette témoin est préparée selon le même protocole que les autres éprouvettes.
Une valeur supérieure à celle de l'éprouvette témoin, arbitrairement fixée à 100, indique un résultat amélioré, c'est-à-dire une force d'arrachement supérieure à celle de l'éprouvette témoin. Les valeurs des forces d'arrachement en base 100 résultant des tests effectués sur les éprouvettes sont résumés dans les tableaux 7 à 9, selon le taux de polymère diénique fonctionnel dans la matrice polymère et selon la nature des fils unitaires.

**Tableau 7**

| Eprouvette | 1a et 1b | 2a et 2b | 3a et 3b | 4a et 4b | 5a et 5b | 6a et 6b |
|---|---|---|---|---|---|---|
| Fraction massique 10% | AF | BF | DF | EF | HF | JF |
| laiton | 3360 | 2320 | 2480 | 900 | 220 | 240 |
| acier | 2780 | 2840 | 3480 | 1460 | 1240 | 3160 |

**Tableau 8**

| Eprouvette | 7a et 7b | 8a et 8b | 9a, 9b et 9c | 10a, 10b et 10c |
|---|---|---|---|---|
| Fraction massique 15% | BF | CF | GF | JF |
| laiton | 2100 | 3240 | 980 | 560 |
| acier | 3300 | 2400 | 2700 | 3940 |
| bronze | | | 2360 | 1740 |

**Tableau 9**

| Eprouvette | 11a et 11b | 12a et 12b |
|---|---|---|
| Fraction massique 25% | AF | CF |
| laiton | 2320 | 2920 |
| acier | 2600 | 1920 |

Présentant des valeurs très supérieures à 100 dans le test d'adhésion, les éprouvettes contenant une composition conforme à l'invention présentent une résistance à l'arrachement fortement améliorée, aussi bien dans le cas des éléments filaires en acier qu'en laiton et en bronze, c'est-à-dire comprenant du fer, du cuivre, du zinc ou de l'étain.

L'amélioration de la résistance à l'arrachement est observée pour toutes les compositions de caoutchouc quelles que soient la microstructure et la macrostructure des polymères diéniques fonctionnels :
- En effet l'amélioration est observée quelle que soit la position du groupe aromatique substitué par au moins 2 fonctions hydroxy vicinales : dans le polymère JF, le groupe aromatique est porté en extrémité de chaîne ; dans les polymères AF, BF, CF, DF, EF,GF et HF, il est dehors des extrémités de chaîne ;
- L'amélioration est constatée lorsque le polymère diénique fonctionnel est aussi bien un polybutadiène (JF), un copolymère de butadiène (DF et EF), un polyisoprène (GF et HF) ou un copolymère d'isoprène (AF, BF et CF) ;
- L'amélioration est observée pour une large gamme de masses molaires moyennes en nombre du polymère diénique fonctionnel, allant de quelques milliers (AF, BF, CF, DF et JF) à plusieurs dizaines de milliers (DF et EF), voire quelques centaines de milliers (HF).

Il est aussi remarquable de noter que l'amélioration de l'adhésion entre le métal et la composition de caoutchouc est observée en l'absence de toute étape de sulfuration généralement nécessaire dans la fabrication des composites à base d'élastomère diénique et d'acier ou de laiton ou de bronze.

## Revendications

1. Composition de caoutchouc à base au moins d'une matrice polymère comportant un élastomère diénique Ed et un polymère diénique fonctionnel qui porte au moins un groupe aromatique substitué par au moins deux fonctions hydroxy, l'élastomère diénique Ed représentant plus de 50% en masse de la matrice polymère, **caractérisée en ce que** le polymère diénique fonctionnel représente au plus 30% en masse de la matrice polymère et deux des fonctions hydroxy sont vicinales.

2. Composition de caoutchouc selon la revendication 1 dans laquelle le polymère diénique fonctionnel porte plusieurs groupes aromatiques substitués par au moins deux fonctions hydroxy, deux des fonctions hydroxy étant vicinales.

3. Composition de caoutchouc selon l'une quelconque des revendications 1 à 2 dans laquelle les deux fonctions hydroxy vicinales sont de préférence respectivement en position méta et para par rapport à la liaison ou au groupe qui assure le rattachement du groupe aromatique à la chaîne du polymère diénique fonctionnel.

4. Composition de caoutchouc selon l'une quelconque des revendications 1 à 3 dans laquelle le groupe aromatique est un groupe dihydroxyaryle de formule (I), le symbole * représentant un rattachement direct ou indirect à la chaîne du polymère diénique fonctionnel.

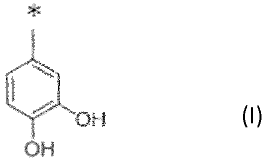

5. Composition de caoutchouc selon l'une quelconque des revendications 1 à 4 dans laquelle le polymère diénique fonctionnel est choisi dans le groupe des polymères constitué par les polybutadiènes, les polyisoprènes, les copolymères du 1,3-butadiène, les copolymères d'isoprène et leurs mélanges.

6. Composition de caoutchouc selon l'une quelconque des revendications 1 à 5 dans laquelle l'élastomère diénique Ed est choisi dans le groupe des élastomères fortement insaturés constitué par les polybutadiènes, les polyisoprènes, les copolymères du 1,3-butadiène, les copolymères d'isoprène et leurs mélanges.

7. Composition de caoutchouc selon l'une quelconque des revendications 1 à 6 dans laquelle l'élastomère diénique Ed est un polyisoprène présentant plus de 90% en masse de liaison 1,4-cis, de préférence le caoutchouc naturel.

8. Composition de caoutchouc selon l'une quelconque des revendications 1 à 7 dans laquelle le polymère diénique fonctionnel représente entre 5 et 30% en masse de la matrice polymère.

9. Composition de caoutchouc selon l'une quelconque des revendications 1 à 8 dans laquelle l'élastomère diénique Ed et le polymère diénique fonctionnel représentent au moins 90% en masse de la matrice polymère.

10. Composition de caoutchouc selon l'une quelconque des revendications 1 à 9, laquelle composition comprend une charge renforçante.

11. Composition de caoutchouc selon la revendication 10 dans laquelle la charge renforçante est un noir de carbone.

12. Composition de caoutchouc selon l'une quelconque des revendications 10 à 11 dans laquelle le taux de charge renforçante est compris dans un domaine allant de 20 parties à 80 parties pour 100 parties de la matrice polymère.

13. Article semi-fini comportant des éléments de renforcement présentant une surface métallique destinée à entrer au contact de la composition de caoutchouc, lesquels éléments de renforcement sont enrobés dans la composition de caoutchouc définie à l'une quelconque des revendications 1 à 12.

14. Article semi-fini selon la revendication 13, lequel article est une armature de renforcement pour pneumatique.

15. Pneumatique comprenant un article semi-fini défini à l'une quelconque des revendications 13 à 14.

## Patentansprüche

1. Kautschukzusammensetzung auf Basis mindestens einer Polymermatrix, welche ein Dien-Elastomer Ed aufweist sowie ein funktionelles Dien-Polymer, welches mit mindestens einer aromatischen Gruppe versehen ist, die mit mindestens zwei funktionellen Hydroxylgruppen versehen ist, wobei das Dien-Elastomer Ed mehr als 50 Massen-% der Polymermatrix ausmacht, **dadurch gekennzeichnet, dass** das funktionelle Dien-Polymer höchstens 30 Massen-% der Polymermatrix ausmacht und die beiden funktionellen Hydroxylgruppen benachbart sind.

2. Kautschukzusammensetzung nach Anspruch 1, wobei das funktionelle Dien-Polymer mit mehreren aromatischen Gruppen versehen ist, die mit mindestens zwei funktionellen Hydroxylgruppen versehen sind, wobei die beiden funktionellen Hydroxylgruppen benachbart sind.

3. Kautschukzusammensetzung nach einem beliebigen der Ansprüche 1 bis 2, wobei die beiden benachbarten funktionellen Hydroxylgruppen sich vorzugsweise in meta- beziehungsweise para-Stellung zur Bindung oder zur Gruppe befinden, über welche die aromatische Gruppe an die Kette des funktionellen Dien-Polymers gebunden ist.

4. Kautschukzusammensetzung nach einem beliebigen der Ansprüche 1 bis 3, wobei es sich bei der aromatischen Gruppe um eine Dihydroxyarylgruppe der Formel (I) handelt, wobei das Zeichen * für eine direkte oder indirekte Bindung an die Kette des funktionellen Dien-Polymers steht.

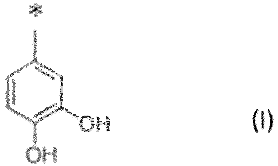

5. Kautschukzusammensetzung nach einem beliebigen der Ansprüche 1 bis 4, wobei das funktionelle Dien-Polymer aus der Gruppe von Polymeren ausgewählt ist, welche aus den Polybutadienen, den Polyisoprenen, den Copolymeren von 1,3-Butadien, den Copolymeren von Butadien und deren Mischungen besteht.

6. Kautschukzusammensetzung nach einem beliebigen der Ansprüche 1 bis 5, wobei das Dien-Elastomer Ed aus der Gruppe der hochgradig ungesättigten Elastomere ausgewählt ist, welche aus den Polybutadienen, den Polyisoprenen, den Copolymeren von 1,3-Butadien, den Copolymeren von Butadien und deren Mischungen besteht.

7. Kautschukzusammensetzung nach einem beliebigen der Ansprüche 1 bis 6, wobei es sich bei dem Dien-Elastomer Ed um ein Polyisopren handelt, das mehr als 90 Massen-% an 1,4-cis-Bindungen aufweist, vorzugsweise um natürlichen Kautschuk.

8. Kautschukzusammensetzung nach einem beliebigen der Ansprüche 1 bis 7, wobei das funktionelle Dien-Polymer zwischen 5 und 30 Massen-% der Polymermatrix ausmacht.

9. Kautschukzusammensetzung nach einem beliebigen der Ansprüche 1 bis 8, wobei das Dien-Elastomer Ed und das funktionelle Dien-Polymer mindestens 90 Massen-% der Polymermatrix ausmachen.

10. Kautschukzusammensetzung nach einem beliebigen der Ansprüche 1 bis 9, wobei die Zusammensetzung einen verstärkenden Füllstoff umfasst.

11. Kautschukzusammensetzung nach Anspruch 10, wobei es sich bei dem verstärkenden Füllstoff um Ruß handelt.

12. Kautschukzusammensetzung nach einem beliebigen der Ansprüche 10 bis 11, wobei der Gehalt an verstärkendem Füllstoff im Bereich von 20 Teilen bis 80 Teilen auf 100 Teile der Polymermatrix liegt.

13. Halbzeug, das Verstärkungselemente aufweist, die eine Metalloberfläche haben, welche dazu bestimmt ist, mit der Kautschukzusammensetzung in Kontakt zu kommen, wobei die Verstärkungselemente mit der Kautschukzusammensetzung überzogen sind, wie sie in einem beliebigen der Ansprüche 1 bis 12 definiert ist.

14. Halbzeug nach Anspruch 13, bei welchem es sich um eine Verstärkungseinlage für Luftreifen handelt.

15. Luftreifen, der ein Halbzeug umfasst, wie es in einem beliebigen der Ansprüche 13 bis 14 definiert ist.

## Claims

1. Rubber composition based on at least one polymer matrix including a diene elastomer Ed and a functional diene polymer that carries at least one aromatic group substituted by at least two hydroxyl functions, where the diene elastomer Ed represents more than 50% by mass of the polymer matrix, **characterized in that** the functional diene polymer represents at most 30% by mass of the polymer matrix and two of the hydroxyl functions are vicinal.

2. Rubber composition according to Claim 1, wherein the functional diene polymer carries several aromatic groups substituted by at least two hydroxyl functions, where two of the hydroxyl functions are vicinal.

3. Rubber composition according to any one of Claims 1 to 2, wherein the two vicinal hydroxyl functions are respectively in the meta and para positions relative to the bond or the group that ensures the attachment of the aromatic group to the chain of the functional diene polymer.

4. Rubber composition according to any one of Claims 1 to 3, wherein the aromatic group is a dihydroxyaryl group having formula (I), where the symbol * represents a direct or indirect attachment to the chain of the functional diene polymer.

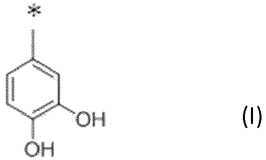

5. Rubber composition according to any one of Claims 1 to 4, wherein the functional diene polymer is selected from the group of polymers constituted by polybutadienes, polyisoprenes, 1,3-butadiene copolymers, isoprene copolymers and mixtures thereof.

6. Rubber composition according to any one of Claims 1 to 5, wherein the diene elastomer Ed is selected from the group of highly unsaturated elastomers constituted by polybutadienes, polyisoprenes, 1,3-butadiene copolymers, isoprene copolymers and mixtures thereof.

7. Rubber composition according to any one of Claims 1 to 6, wherein the diene elastomer Ed is a polyisoprene having more than 90% by mass of 1,4-cis bond, preferably natural rubber.

8. Rubber composition according to any one of Claims 1 to 7, wherein the functional diene polymer represents between 5 and 30% by mass of the polymer matrix.

9. Rubber composition according to any one of Claims 1 to 8, wherein the diene elastomer Ed and the functional diene polymer represent at least 90% by mass of the polymer matrix.

10. Rubber composition according to any one of Claims 1 to 9, which composition comprises a reinforcing filler.

11. Rubber composition according to Claim 10, wherein the reinforcing filler is a carbon black.

12. Rubber composition according to either one of Claims 10 and 11, wherein the reinforcing filler content is within a range extending from 20 to 80 parts per hundred parts of the polymer matrix.

13. Semi-finished article including reinforcement elements with a metallic surface intended to come into contact with the rubber composition, which reinforcement elements are coated in the rubber composition defined in any one of Claims 1 to 12.

14. Semi-finished article according to Claim 13, which article is a reinforcing reinforcer for tyres.

15. Tyre that comprises a semi-finished article defined in either one of Claims 13 and 14.
